# EUROPÄISCHE PATENTSCHRIFT

(11) **EP 2 113 787 B1**
(45) Veröffentlichungstag und Bekanntmachung des Hinweises auf die Patenterteilung: **25.06.2014**
(21) Anmeldenummer: 09006066.6
(22) Anmeldetag: 04.05.2009
(51) Int. Cl.: G01S 7/40, G01S 13/93

(54) **Anlage zur Prüfung der Ausrichtung von Radarsensoren**
Device for monitoring the alignment of radar sensors
Installation de contrôle de l'alignement de capteurs radar

(30) Priorität: 02.05.2008 DE 102008021915
(43) Veröffentlichungstag der Anmeldung: 04.11.2009
(73) Patentinhaber: Koch, Harro, 30974 Wenningsen (DE)
(72) Erfinder: Koch, Harro, 30974 Wenningsen (DE)
(74) Vertreter: Körner, Peter

(56) Entgegenhaltungen:
- EP-A- 1 001 274
- EP-A- 1 031 852
- WO-A-2005/071434
- DE-A1- 2 831 615
- DE-A1- 10 042 105
- DE-A1- 19 642 811
- DE-A1- 19 900 362
- DE-B3-102004 026 044

## Beschreibung

Die Erfindung betrifft eine Anlage zur Prüfung der Ausrichtung der Strahlungsachse eines Radarsensors an einem Fahrzeug nach dem Oberbegriff des Anspruchs 1 und ein Verfahren zur Prüfung der Ausrichtung der Strahlungsachse eines Radarsensors an einem Fahrzeug nach dem Oberbegriff des Anspruchs 11.

Zur Erhöhung der Sicherheit im Straßenverkehr werden Fahrzeuge mit Abstandmessgeräten ausgestattet, die mittels Radartechnik den Abstand zu einem vorausfahrenden Fahrzeug oder zu einem in Fahrtrichtung liegenden Hindernis messen und abhängig von der eigenen Geschwindigkeit bei Gefahr Warnsignale erzeugen und/oder automatisch die Bremse betätigen. Die Abstandmessgeräte verwenden als Sensor beispielsweise einen Abstandsregelsensor, welcher als ACC (Adaptive Cruise Control) bezeichnet wird. Der ACC-Radarsensor unterstützt den Fahrer, indem er den Verkehr automatisch beobachtet, den Abstand misst und auf die eingestellte Geschwindigkeit regelt. Bei zu geringem Abstand wird beispielsweise automatisch ein Bremsvorgang eingeleitet.

Ein falsch eingestellter Radarsensor kann z.B. dazu führen, dass ein langsameres Fahrzeug auf einer benachbarten Fahrspur erfasst wird und dadurch ein unnötiger Bremsvorgang ausgelöst wird. Für den nachfolgenden Verkehr wird das ACC-Fahrzeug damit zum Sicherheitsrisiko. Damit ein derartiges Risiko sicher vermieden werden kann, muss die Strahlungsachse des Radarsensors exakt in Geradeausfahrtrichtung weisen. Eine Abweichung von nur wenigen Winkelminuten führt bereits zu Fehlfunktionen. Um dies zu vermeiden, muss die korrekte Ausrichtung des Radarsensors regelmäßig überprüft, vermessen und im Bedarfsfalle korrigiert werden.

Aus der DE 10 2004 026 044 B3 ist eine gattungsgemäße Anlage und ein gattungsgemäßen Verfahren bekannt. Die Anlage zur Prüfung der Ausrichtung der Strahlungsachse eines Radarsensors an einem Fahrzeug weist wenigstens eine Referenzlichtquelle in Form von Laserlichtquellen auf, welche seitlich am Fahrzeug mit Ausrichtung der Lichtstrahlrichtung im rechten Winkel zur Hinterachse des Fahrzeugs und nach vorn weisend angebracht ist. Ferner weist diese bekannte Anlage eine als

tretende Laserstrahl den auf dem Radarsensor fest angebauten Spiegel trifft.

Aus der DE 10 2004 026 044 B3 ist eine Anlage zur Prüfung der Ausrichtung der Strahlungsachse eines Radarsensors an einem Fahrzeug bekannt. Die Anlage weist wenigstens eine Referenzlichtquelle in Form von Laserlichtquellen auf, welche seitlich am Fahrzeug mit Ausrichtung der Lichtstrahlrichtung im rechten Winkel zur Hinterachse des Fahrzeugs und nach vorn weisend angebracht ist. Ferner weist diese bekannte Anlage eine als Laserlichtquelle ausgebildete Messlichtquelle auf, welche am Gehäuse des Radarsensors mit Ausrichtung der Lichtstrahlrichtung parallel zur Strahlungsachse des Radarsensors angebracht ist. Die Referenzlichtquellen und die Messlichtquelle sind jeweils auf einen vor dem Fahrzeug angeordneten, in Richtung der Fahrzeuglängsachse verfahrbaren Messwagen mit Messskalen, auf denen die Laserstrahlen der Referenzlaserquelle und der Messlaserquelle auftreffen, gerichtet.

Aus der EP 1 031 852 A2 ist ein Verfahren und eine Vorrichtung zur Justierung eines Abstandsmessgeräts bekannt, das optische Messmitteln umfasst, die die Ausrichtung eines Sendekopfs des Abstandsmessgeräts bezüglich der Fahrachse des Kraftfahrzeugs erfassen können. Die Veröffentlichung beschreibt nicht, wie die optischen Messmitteln auf die Fahrachse des Kraftfahrzeugs eingerichtet werden.

Aus der EP 1 001 274 A1 ist ein Verfahren zur Justierung eines Strahlengangs eines strahlaussendenden Sensors an einem Kraftfahrzeug bekannt. Von einer vor dem Fahrzeug angeordneten Lichtquelle wird ein Justierstrahl auf eine Fläche am Sensor geworfen, dort reflektiert und auf einer Projektionsfläche in der Ebene der Lichtquelle abgebildet. Zusätzlich wird die Fahrachse als Verbindung zwischen den Mittelpunkt der Vorder- und Hinterachse ermittelt. Die Abweichung des reflektierten Lichtstrahls vom ausgesendeten Lichtstrahl soll der Abweichung der optischen Achse der Lichtquelle von der Fahrachse entsprechen. Wird die Abweichung des reflektierten Lichtstrahls von dem ausgesendeten Lichtstrahl in Übereinstimmung mit der Abweichung der optischen Achse der Lichtquelle von der Fahrzeugachse gebracht, so ist der Sensor auf die Fahrachse justiert.

Aus der DE 196 42 811 A1 ist ein Verfahren zum Justieren einer Richtantenne eines Radarsystems bekannt. Wie bei den vorgbeschriebenen veroffentlichungen wird auch hier eine Laserquelle eingesetzt, deren Strahl auf einen Spiegel des Radarsystems trifft und auf einer Projektionsfläche in der Ebene der Laserquelle abgebildet wird. Dazu muss das Fahrzeug, an dem das Radarsystem angebracht ist, zur Laserquelle und Projektionsfläche ausgerichtet werden. Wie das in der Praxis durchgeführt wird, ist nicht beschrieben.

Aus der DE 199 00 362 A1 ist ein Verfahren zum Einstellen der Achse eines fahrzeuginternen Radars bekannt. Dazu wird eine Fahrzeugachse bestimmt, indem ausgehend von zwei Karosseriepunkten an den A-Säulen zwei unterschiedliche gleichschenklige Dreiecke gebildet werden und eine durch die Scheitelpunkte dieser Dreiecke verlaufende Gerade als Fahrzeugachse betrachtet wird. Die Achse des fahrzeuginternen Radars wird parallel zu dieser Fahrzeugachse ausgerichtet.

Aus der WO 2005/071434 A1 sind ein Verfahren und eine Vorrichtung zur Winkeljustage eines Sensors in einem Kraftfahrzeug bekannt. Dazu wird die Fahrachse des Kraftfahrzeugs durch optische Vermessung der Hinterachse bestimmt. Anschließend wird eine optische Vermessung an Flächen des Sensors vorgenommen.

Der Erfindung liegt die Aufgabe zugrunde, ein Verfahren und eine Anlage zur Prüfung der Ausrichtung der Strahlungsachse eines Radarsensors an einem Fahrzeug zu schaffen, mit der eine schnelle und exakte Prüfung bei Neufabrikation als auch bei Wartungs- und Reparaturarbeiten von Fahrzeugen unterschiedlichster Fabrikate möglich ist.

Diese Aufgabe wird bei einer Anlage nach dem Oberbegriff des Anspruchs 1 durch die Merkmale dieses Anspruchs und bei einem Verfahren nach dem Oberbegriff des Anspruchs 7 durch die Merkmale dieses Anspruchs gelöst.

Weiterbildungen und vorteilhafte Ausgestaltungen ergeben sich aus den Unteransprüchen.

Die Erfindung zeichnet sich durch eine Abkehr der bisherigen Lösung aus, welche eine Anordnung der Laserlichtquelle direkt am Fahrzeug, nämlich an der Referenzspiegelflache des Radarsensors; vorsah. Die stets am Fahrzeug vorhandene Referenzspiegelfläche wird nunmehr aktiv zur Messung genutzt, indem die Spiegelfläche als Reflektor eines Messstrahls genutzt wird. Sofern die Spiegelfläche keinen optischen Spiegel umfasst, kann dieser durch einen passiven Klemmaufsatz mit einem optischen Spiegel für die Messung ausgestattet werden. Hingegen ist die Laserlichtquelle am Messtisch angeordnet, was mit überraschenden Vorteilen verbunden ist. Denn die Laserlichtquelle muss nun nicht mehr zeitaufwändig am Fahrzeug angebracht und dort justiert werden, sondern befindet sich am Messtisch, wo sie bequem und einfach justiert und befestigt werden kann. Eine Beschädigung der Referenzspiegelfläche durch das Gewicht der Laserlichtquelle einschließlich deren Batterie sowie durch Bedienungsfehler bei der Justage/Montage der Laserlichtquelle, wie sie bislang in Extremfällen vorkommen konnten, ist ausgeschlossen.

Die erfindungsgemäße Anlage erlaubt nunmehr eine einfache und schnelle Montage der Laserlichtquelle und eine sehr hohe Messgenauigkeit mit einer in praktischen Versuchen festgestellten Messabweichung von nur ± 0,05°. Durch eine zuverlässige Reproduzierbarkeit der Messwerte ist die erfindungsgemäße Anlage an verschiedenen ACC-Sensoren verwendbar. Auch die sonst notwendige Rüst- und Montagezeit lässt sich mit der erfindungsgemäßen Anlage deutlich verringern, da die Justage des ACC-Sensors inkl. Rüstzeit in weniger als 10 Minuten durchführbar ist. Besonders vorteilhaft ist die Anlage dadurch, dass sie auf jedem ebenen Werkstattboden und sogar in Verbindung mit Montagegruben einsetzbar ist. Die Anlage macht kein Freiheben der Räder des zu vermessenden Fahrzeugs erforderlich.

Am Messtisch sind Spiegelflächen angeordnet, welche den Referenzlaserquellen zugeordneten Messskalen zugewandt und parallel zu diesen angeordnet sind. Diese Maßnahme erleichtert das Vermessen des Radarsensors ungemein, insbesondere dann, wenn - was gemäß einer praktischen Ausgestaltung der Erfindung vorgesehen sein kann - der Messtisch ein verwindungssteifes, exakt lineares Trägerprofil aufweist, auf dessen Vorderseite sich die Spiegelflächen befinden.

An der Vorderseite des Trägerprofils ist eine ferromagnetische Oberfläche angeordnet.

Dies ist insbesondere dann von großem Nutzen, wenn entsprechend einer besonders bevorzugten Ausgestaltung der Erfindung vorgesehen ist, dass die Laserlichtquelle mit einem ein- und ausschaltbaren Magnetfuß versehen ist, welcher an der magnetischen Oberfläche des Trägerprofils anbringbar ist. Durch diese Ausgestaltung ist die Laserlichtquelle auf besonders einfache und schnelle Weise einerseits mit dem Messtisch verbindbar und andererseits besonders schnell auf den Referenzspiegel des Radarsensors des Fahrzeugs ausrichtbar. Neben der einfachen und schnellen Bedienbarkeit hat auch diese Art der Ausführung den Vorteil, dass sie äußerst kostengünstig umzusetzen ist. Vergleichbare Anlagen verfügen für diesen Zweck über kostspielige Führungselemente für die Messlichtquellen, welche Führungselemente zwangsläufig in doppelter Ausführung, nämlich horizontal und vertikal, vorhanden sein müssen.

In einer besonders praktischen Weiterbildung der Erfindung ist vorgesehen, dass der schaltbare Magnetfuß eine plane Rückseite mit einer Haftfläche zur dauerhaften Befestigung am Trägerprofil und einen Schalter zum Ein- und Auskoppeln eines im Magnetfuß angeordneten Permanentmagneten oder zum Ein- und Ausschalten eines im Magnetfuß angeordneten Elektromagneten aufweist.

Ferner lässt sich die Erfindung dadurch weiterbilden, dass vorgesehen ist, dass die Laserlichtquelle von der Messskala in Form eines zweidimensionalen Messgitters umgeben ist.

Besonders bevorzugt wird eine Ausgestaltung der Erfindung, welche sich dadurch auszeichnet, dass das horizontal angeordnete Trägerprofil an einem Haltegestell mit vertikalen Pfosten befestigt ist, an deren Enden vertikale Füße quer zum Trägerprofil angeordnet sind, wobei die Füße an ihren Enden jeweils mit Stellfüßen versehen sind. Dies lässt sich noch dadurch weiter ausgestalten, dass jeder Stellfuß jeweils einen auf einer Stellfläche ruhenden konvex ausgeformten Gleitfuß aufweist, welcher durch einen durch den zugeordneten Fuß geführten Schraubbolzen mit einem Sterngriff verbunden ist.

Ebenfalls kann vorgesehen sein, dass eine Libelle am Messtisch angeordnet ist, durch welche eine vertikale Ausrichtung der ferromagnetischen Oberfläche an der Vorderseite des Trägerprofils des Messtischs besonders einfach vorgenommen werden kann.

Die Aufgabe zur Angabe eines Verfahrens wird durch Anbringen der Laserlichtquelle am Messtisch und Ausrichten der Lichtstrahlrichtung der Laserlichtquelle auf die Referenzspiegelfläche des Fahrzeugs und durch Messen des von der Referenzspiegelfläche des Fahrzeugs reflektierten Lichtstrahls auf eine an der Laserlichtquelle angeordnete Messskala gelöst. Dieses Verfahren bringt gegenüber dem bislang angewandten Verfahren deutliche Vorteile, da es einfacher und schneller durchführbar ist, und dies vor allem bei allen erdenklichen Fahrzeugtypen. So lassen sich mit dem erfindungsgemäßen Verfahren bzw. mit der erfindungsgemäßen Anlage sowohl Personenkraftwagen, als auch schwerste Lastkraftwagen messen, ohne dass der Einsatz eines an die Fahrzeuggröße angepassten Messtisches oder einer speziellen Laserlichtquelle notwendig wäre.

Nachfolgend wird die Erfindung anhand eines Ausführungsbeispiels erläutert, das in der Zeichnung dargestellt ist.

### Darin zeigen:

- Fig. 1: eine Draufsicht auf ein Fahrzeug mit einer erfindungsgemäßen Anlage zur Prüfung der Ausrichtung der Strahlungsachse eines Radarsensors,
- Fig. 2: einen Messtisch und eine Laserlichtquelle der Anlage aus Fig. 1 in perspektivischer Ansicht,
- Fig. 3: einen Messtisch der Anlage aus Fig. 1 in perspektivischer Ansicht,
- Fig. 3a: ein Detail des Kreises A aus Fig. 3,
- Fig. 3b: ein Detail des Kreises B aus Fig. 3,
- Fig. 4: eine Laserlichtquelle der Anlage aus Fig. 1 in perspektivischer Ansicht von vorn,
- Fig. 5: eine Laserlichtquelle der Anlage aus Fig. 1 in perspektivischer Ansicht von hinten, und
- Fig. 6: eine perspektivische Ansicht einer Referenzlaserquelle aus Fig. 1

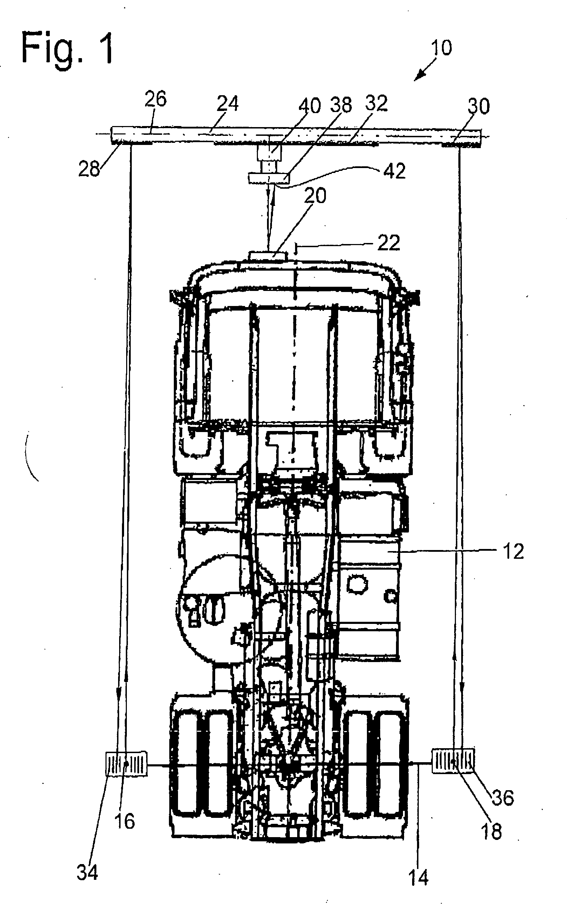

Fig. 1 zeigt eine Draufsicht auf ein Ausführungsbeispiel einer erfindungsgemäßen Anlage 10 und auf ein nur schematisch dargestelltes Kraftfahrzeug 12 in Form einer LKW-Zugmaschine mit wenigstens einer durch eine Horizontallinie angedeuteten Hinterachse 14.An jeder äußeren Felge der Hinterachse 14 als geometrischer Fahrachse des Fahrzeugs 12 ist jeweils eine Referenzlaserquelle 16, 18 angeordnet. Die Laserstrahlrichtung der Referenzlaserquellen 16, 18 weist im rechten Winkel zur Hinterachse 14 nach vorn. An der Front des Kraftfahrzeuges ist ein Radarsensor mit einer Referenzspiegelfläche 20 angeordnet. Radarsensor und Referenzspiegelfläche 20 sind herstellerbedingt vorgegeben und unveränderbar, jedoch hinsichtlich der Strahlungsachse des Radarsensors justierbar, an unterschiedlichen horizontalen und vertikalen Positionen der Front des Kraftfahrzeuges 12 angeordnet.

Quer zu einer Fahrzeuglängsachse 22 ist im Abstand von etwa 1 m als Kernstück der Anlage 10 ein Messtisch 24 angeordnet, dessen Basis ein verwindungssteifes, exakt lineares Trägerprofil 26 ist, auf dessen Vorderseite sich im Wesentlichen zwei Spiegelflächen 28, 30 sowie eine ferromagnetische Oberfläche 32 befinden. Durch die Anbringung dieser Komponenten auf dem besagten Trägerprofil 26 befinden sich diese in einer parallelen Ausrichtung zueinander.

Zur Durchführung der Messung ist es zunächst erforderlich, das Trägerprofil 26 in einem definierten Abstand von vorzugsweise 0,5 bis 1,5 m vor dem Fahrzeug 12 zu positionieren, und zur geometrischen Fahrachse des Fahrzeuges einzustellen. Der genaue Abstand richtet sich nach dem Gittermaß der Messgitter 68, 70, damit eine direkte Zuordnung zwischen den Gitterlinien und dem Winkel zwischen der Fahrzeugachse und der Strahlungsachse des Radarsensors möglich ist. Zur Einstellung werden an einer der ungelenkten Achsen, im gezeigten Ausführungsbeispiel an der Hinterachse 14 des Fahrzeuges 12, rechtwinklig zur Rotationsachse der Räder die Laserlichtquellen 16, 18 angebracht, die wiederum mit einer Messskala 34, 36 definiert in Verbindung stehen.

Die Laserstrahlen dieser Laserlichtquellen 16, 18 werden dazu auf die am Trägerprofil 26 befindlichen Spiegelflächen 28, 30 gerichtet. Die reflektierten Laserstrahlen treffen daraufhin auf die besagten Messskalen 34, 36. Durch anschließendes Ausrichten des Trägerprofils 26 wird erreicht, dass die reflektierten Laserstrahlen auf beiden Fahrzeugseiten um das gleiche Abstandsmaß zur Ursprungs-Laserlichtquelle auf die jeweilige Messskala 34 bzw. 36 treffen. Das anschließende Ausrichten erfolgt über das Verschieben des gesamten Haltegestells des Messtischs 24, an dem das Trägerprofil 26 befestigt ist.

Nach dem Ausrichten des Trägerprofils 26 wird eine weitere Laserlichtquelle 38 so positioniert, dass deren Laserstrahl auf die Referenzspiegelfläche 20 des Radarsensors trifft. Diese Laserlichtquelle 38 ist mit einem ein- und ausschaltbaren Magnetfuß 40 ausgestattet, der sich im ausgeschalteten Zustand leicht auf der zugeordneten magnetischen Oberfläche 32 verschieben, sowie nach der endgültigen Positionierung durch Einschalten der Magnetkraft sicher fixieren lässt. Die Laserlichtquelle 38 ist ebenfalls von einer zweidimensionalen Messskala 42 umgeben, wobei der Austrittspunkt des Laserstrahls im Ursprung des Koordinatensystems dieser Messskala 42 liegt. Der Auftreffpunkt des von dem Referenzspiegel 20 des Kraftfahrzeugs 12 reflektierten Laserstrahls auf dieser Messskala 42 gibt daraufhin Auskunft über die Ausrichtung der Strahlungsachse des Radarsensors des Kraftfahrzeugs 12 im Bezug zur geometrischen Fahrachse.

Die Anlage 10 arbeitet im Wesentlichen berührungslos. Die Befestigung einer Laserlichtquelle auf der Referenzspiegelfläche 20 des Radarsensors, wie bei bisherigen Geräten üblich, wird nicht vorgenommen, somit kann diese weder beschädigt noch zerstört werden. Die Anlage 10 arbeitet unabhängig von der Art des Einbaus des Radarsensors im Kraftfahrzeug 12. Auch zukünftige Abwandlungen im Bereich der Frontverkleidungen der betreffenden Fahrzeuge sind bei der Verwendung der erfindungsgemäß ausgebildeten Anlage 10 unerheblich. Sämtliche Radarsensoren, welche mit einem Spiegel als Referenzfläche ausgestattet sind, können mit der erfindungsgemäß ausgebildeten Anlage 10 vermessen und deren Radarsensor bei festgestellten Abweichungen von vorgegebenen Sollwerten korrigiert werden.

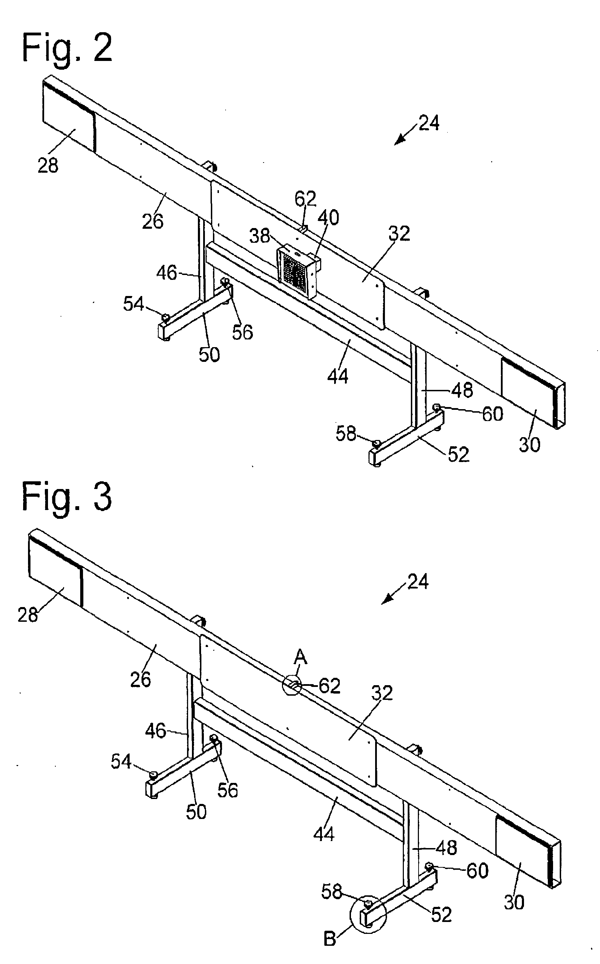

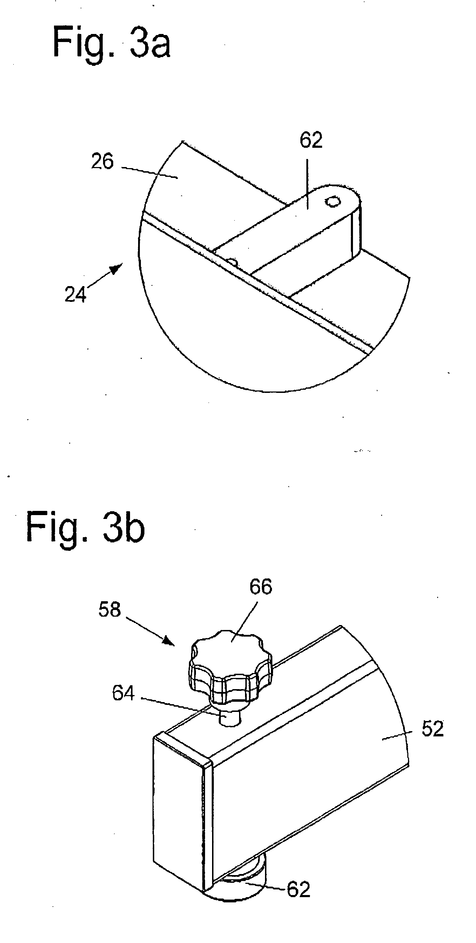

In den Fig. 2 bis 3b ist der Messtisch 24 aus Fig. 1 in perspektivischer Ansicht von vorn und in vergrößerten Detailansichten entsprechend der Kreise A und B der Fig. 3 dargestellt. Bei der Darstellung nach Fig. 2 ist die Laserlichtquelle 38 mit ihrem Magnetfuß 40 an der magnetischen Oberfläche 32 befestigt, während bei der Darstellung nach Fig. 3 die Laserlichtquelle 38 nicht montiert ist.

Das Trägerprofil 26, an dessen Vorderseite die Spiegelflächen 28, 30 und die magnetische Oberfläche 32 angebracht sind, besteht aus einem kastenförmigen Hohlprofil aus Aluminium. Es kann aber auch aus einem ferromagnetischen Material, beispielsweise aus Stahl, bestehen, so dass in diesem Fall auf eine separate magnetische Oberfläche 32 verzichtet werden kann. Das horizontal angeordnete Trägerprofil 26 ist an einem Haltegestell 44 mit vertikalen Pfosten 46, 48 befestigt, an deren Enden horizontal verlaufende Füße 50, 52 quer zum Trägerprofil 26 angeordnet sind. Die Füße 50, 52 sind an ihren Enden jeweils mit Stellfüßen 54 - 60 versehen.

Eine Libelle 62, welche in vergrößerter Ansicht entsprechend dem Ausschnitt des Kreises A aus Fig. 3 in Fig. 3a dargestellt ist, dient der präzisen vertikalen Ausrichtung der ferromagnetischen Oberfläche an der Vorderseite des Trägerprofils des Messtischs 24.

In Fig. 3b ist der Stellfuß 58 des Fußes 52 aus dem Kreis B der Fig. 3 in vergrößerter Ansicht dargestellt. Der Stellfuß 58, welcher genau so ausgebildet ist wie die anderen Stellfüße 54, 56 und 60, weist einen auf einer Stellfläche ruhenden konvex ausgeformten Gleitfuß 62 aus Kunststoff auf, welcher durch einen durch den Fuß 52 geführten Schraubbolzen 64 mit einem Sterngriff 66 verbunden ist. Durch den Sterngriff 66 lässt sich die Höhe des Gleitfußes 62 in Bezug auf den Fuß 52 verändern. Eine entsprechende Höhenveränderung des Gleitfußes 62 bewirkt eine Neigungsänderung des Haltegestells 44 und damit des Trägerprofils 26 des Messtischs 24, wodurch ein präzises und feinfühliges Verschieben des Messtisches 24 ermöglicht ist. Diese Art der Ausrichtung hat den Vorteil, dass zusätzliche Einstell- und Verschwenkeinrichtungen am Haltegestell 44 entfallen und die Anlage 10 somit kostengünstiger herzustellen ist.

Die Ausführung des Messtischs 24 mit Trägerprofil 26 ermöglicht es ferner, die Anlage 10 auch über einer Montagegrube zu verwenden. Die Aufstandspunkte der vier Gleitfüße 62 der Stellfüße 54 ∼ 60 liegen ausreichend weit außermittig zum Trägerprofil 26, sodass die Anlage 10 in Verbindung mit allen gängigen Montagegruben eingesetzt werden kann.

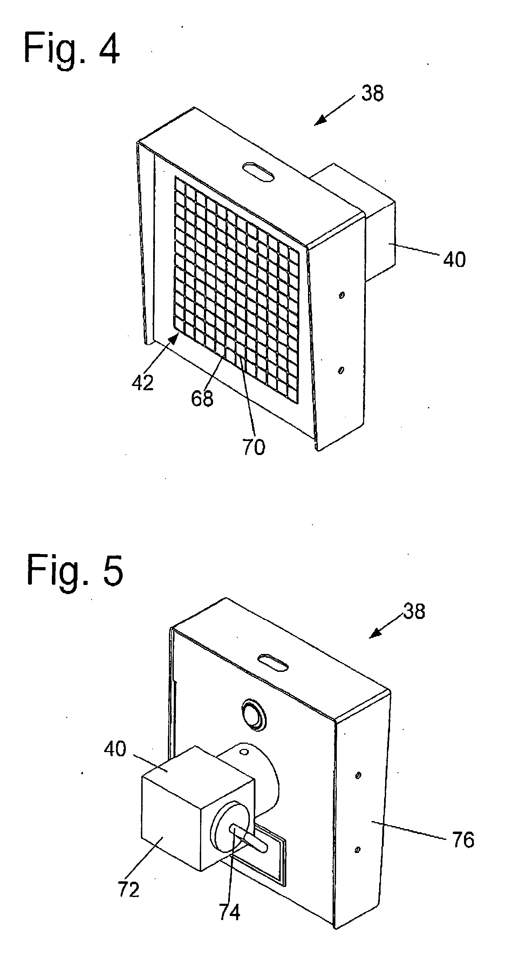

In den Fig. 4 und 5 ist die Laserlichtquelle 38 aus den Fig. 1 und 2 in perspektivischer Ansicht von vorne und von hinten dargestellt. Die Laserlichtquelle 38 ist, was in Fig. 4 zu erkennen ist, von der Messskala 42 in Form eines zweidimensionalen Messgitters 68, 70 umgeben, wobei der Austrittspunkt des Laserstrahls im Ursprung des Koordinatensystems dieser Messskala 42 liegt. Der Auftreffpunkt des von dem Referenzspiegel 20 reflektierten Laserstrahls auf der Messskala 42 gibt daraufhin Auskunft über die Ausrichtung der Strahlungsachse des Radarsensors im Bezug zur geometrischen Fahrachse 22.

In Fig. 5 ist die Laserlichtquelle 38 von hinten dargestellt. Zu erkennen ist dort insbesondere der schaltbare Magnetfuß 40 mit planer Rückseite, welche als Haftfläche 72 zur dauerhaften Befestigung am Trägerprofil 26 bzw. an der magnetischen Oberfläche 32 dient. Mittels eines Schalters 74 lässt sich ein im Inneren des Magnetfuß 40 angeordneter Permanentmagnet ein- und auskoppeln.

Durch die Verwendung der am Messtisch 24 angeordneten Laserlichtquelle 38 arbeitet die Anlage 10 im Wesentlichen berührungslos. Die Befestigung einer Laserlichtquelle auf der Referenzspiegelfläche 20 des Radarsensors, wie bei den bisherigen Anlagen üblich, wird nicht vorgenommen, somit kann diese weder beschädigt noch zerstört werden. Die Anlage 10 arbeitet unabhängig von der Art des Einbaus des Radarsensors im Fahrzeug 12. Auch zukünftige Abwandlungen im Bereich der Frontverkleidungen der betreffenden Fahrzeuge sind bei der Verwendung der erfindungsgemäßen Anlage 10 unerheblich.

Sämtliche Radarsensoren, die mit einem Spiegel als Referenzfläche ausgestattet sind, können mit der erfindungsgemäß ausgebildeten Anlage 10 vermessen werden. Sofern die Referenzfläche keinen optischen Spiegel umfasst, kann dieser durch einen passiven Klemmaufsatz mit einem optischen Spiegel für die Messung ausgestattet werden.

Die Anlage erlaubt eine einfache und schnelle Montage und eine sehr hohe Messgenauigkeit mit einer in praktischen Versuchen festgestellten Messabweichung von ± 0,05°. Durch eine zuverlässige Reproduzierbarkeit der Messwerte ist die erfindungsgemäße Anlage an verschiedenen ACC-Sensoren verwendbar. Auch die sonst notwendige Rüst- und Montagezeit lässt sich mit der erfindungsgemäßen Anlage deutlich verringern, da die Justage des ACC-Sensors inkl. Rüstzeit in weniger als 10 Minuten durchführbar ist. Besonders vorteilhaft ist die Anlage dadurch, dass sie auf jedem ebenen Werkstattboden und sogar in Verbindung mit Montagegruben einsetzbar ist. Die Anlage macht kein Freiheben der Räder des zu vermessenden Fahrzeugs erforderlich.

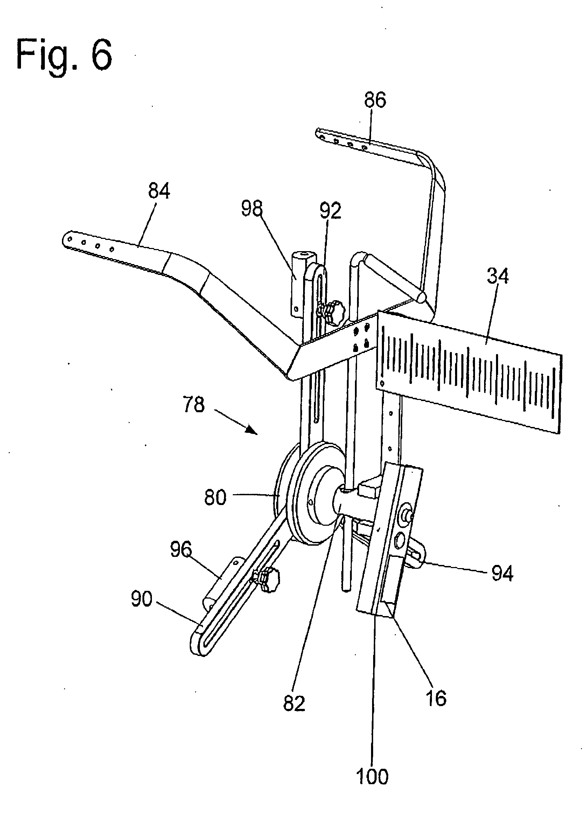

In Fig. 6 ist in perspektivischer Ansicht die Referenzlaserquelle 16 mit Messskala 34 aus Fig. 1 an einer Halterung 78 dargestellt. Die Referenzlaserquelle 16 mit Messskala 34 ist in ihrem konstruktiven Aufbau mit der Referenzlaserquelle 18 aus Fig. 1 identisch und entsprechend ist die Referenzlaserquelle 18 mit einer Halterung nebst Anbauteilen verbunden, welcher der Halterung 78 entspricht. Die Halterung 78 weist eine Zentralplatte 80 auf, von der sich in Verlängerung der Fahrzeugachse 14 eine Achse 82 erstreckt, an welcher die Referenzlaserquelle 16 schwenkbeweglich angeordnet ist. Die Messskala 34 ist starr an Schwenkbügeln 84, 86 befestigt, welche sich am Laufstreifen eines Fahrzeugluftreifens anlegen. Die Schwenkbügel 84, 86 sind über einen Halter 88 schwenkbeweglich an der Achse 82 gehaltert.

Sich sternförmig radial von der Zentralplatte 80 erstreckende Bügel 90 - 94 werden mittels entlang der Bügel 90 - 94 längsverschieblich gehalterter Anlagekörper 96, 98 an einer Felge eines zu vermessenden Fahrzeugrades angelegt. Die Referenzlaserquelle 16 ist an ihrem vorderen Ende mit einer Lichtaustrittsöffnung 100 versehen, welche im Messzustand - der in Fig. 6 nicht dargestellt ist - horizontal und zur Spiegelfläche 28 ausgerichtet ist. Nach Ausrichten und Anschalten der Referenzlaserquelle 16 trifft aus der Lichtaustrittsöffnung 100 austrahlendes Licht auf die Spiegelfläche 28, von wo aus es auf die Messskala 34 reflektiert wird. Bei Abweichungen vom Idealpunkt der Messskala 34 kann der Messtisch 24 in der zuvor beschriebenen einfachen Weise nachjustiert werden, indem der Messtisch 24 durch Veränderung der Gleitfüße 62 in seiner Lage verändert wird. Der Messtisch 24 wird so ausgerichtet, dass die Auftreffpunkte des reflektierten Lichts auf die beiden Messskalen 34 und 36 den gleichen gegenseitigen Abstand zur jeweiligen Referenzlaserquelle 16, 18 haben.

### Bezugszeichenliste:

- 10: Anlage
- 12: Kraftfahrzeug
- 14: Hinterachse
- 16: Referenzlaserquelle
- 18: Referenzlaserquelle
- 20: Referenzspiegelfläche
- 22: Fahrzeuglängsachse
- 24: Messtisch
- 26: Trägerprofil
- 28: Spiegelfläche
- 30: Spiegelfläche
- 32: magnetische Oberfläche
- 34: Meßskala
- 36: Messskala
- 38: Laserlichtquelle
- 40: Magnetfuß
- 42: Messskala
- 44: Haltegestell
- 46: Pfosten
- 48: Pfosten
- 50: Fuß

- 52: Fuß
- 54: Stellfuß
- 56: Stellfuß
- 58: Stellfuß
- 60: Stellfuß
- 62: Gleitfuß
- 64: Schraubbolzen
- 66: Sterngriff
- 68: Messgitter
- 70: Messgitter
- 72: Haftfläche
- 74: Schalter
- 76: Gehäuse
- 78: Halterung
- 80: Zentralplatte
- 82: Achse
- 84: Schwenkbügel
- 86: Schwenkbügel
- 88: Halter
- 90: Bügel
- 92: Bügel
- 94: Bügel
- 96: Anlagekörper
- 98: Anlagekörper
- 100: Lichtaustrittsöffnung

## Patentansprüche

1. Anlage (10) zur Prüfung der Ausrichtung der Strahlungsachse eines Radarsensors an einem Fahrzeug (12), mit wenigstens einer Referenzlaserquelle (16, 18), welche seitlich am Fahrzeug mit Ausrichtung der Lichtstrahlrichtung im rechten Winkel zur Hinterachse (14) des Fahrzeugs (12) und nach vorn weisend angebracht ist, und mit einer Laserlichtquelle (38), welche mit einer Referenzspiegelfläche (20) am Radarsensor des Fahrzeugs (12) in Wirkverbindung ist, wobei die Referenzlaserquellen (16, 18) und die Referenzspiegelfläche (20) am Radarsensor des Fahrzeugs (12) auf einen vor dem Fahrzeug (12) angeordneten Messtisch (24) gerichtet sind, welcher quer zur Fahrzeuglängsachse (22) angeordnet ist, wobei am Messtisch (24) Spiegelflächen (28, 30) angeordnet sind, welche den Referenzlaserquellen (16, 18) zugeordnete Messskalen (34, 36) zugewandt und parallel zu diesen angeordnet sind, **dadurch gekennzeichnet, dass** der Messtisch (24) ein verwindungssteifes, exakt lineares Trägerprofil (26) aufweist, auf dessen Vorderseite sich die Spiegelflächen (28, 30) befinden, dass eine ferromagnetische Oberfläche (32) an der Vorderseite des Trägerprofils (26) angeordnet ist, die Laserlichtquelle (38) verschieb- und fixierbar am Messtisch (24) angebracht und der Referenzspiegelfläche (20) am Radarsensor des Fahrzeugs (12) zugewandt ist, wobei die Laserlichtquelle (38) von einer Messskala (42) umgeben ist, auf welche von der Referenzspiegelfläche (20) am Radarsensor des Fahrzeugs (12) reflektiertes Licht der Laserlichtquelle (38) auftrifft und dass die Laserlichtquelle (38) mit einem ein- und ausschaltbaren Magnetfuß (40) versehen ist, welcher an der ferromagnetischen Oberfläche (32) des Trägerprofils (26) anbringbar ist.

2. Anlage nach Anspruch 1, **dadurch gekennzeichnet, dass** der schaltbare Magnetfuß (40) eine plane Rückseite mit einer Haftfläche (72) zur dauerhaften Befestigung am Trägerprofil (26) und einen Schalter (74) zum Ein- und Auskoppeln eines im Magnetfuß (40) angeordneten Permanentmagneten oder zum Ein- und Ausschalten eines im Magnetfuß (40) angeordneten Elektromagneten aufweist.

3. Anlage nach Anspruch 1 oder 2, **dadurch gekennzeichnet, dass** die Laserlichtquelle (38) von der Messskala (42) in Form eines zweidimensionalen Messgitters (68, 70) umgeben ist.

4. Anlage nach einem der Ansprüche 1 bis 3, **dadurch gekennzeichnet, dass** das horizontal angeordnete Trägerprofil (26) an einem Haltegestell (44) mit vertikalen Pfosten (46, 48) befestigt ist, an deren Enden vertikale Füße (50, 52) quer zum Trägerprofil (26) angeordnet sind, wobei die Füße (50, 52) an ihren Enden jeweils mit Stellfüßen (54 - 60) versehen sind,

5. Anlage nach Anspruch 4, **dadurch gekennzeichnet, dass** jeder Stellfuß (54 - 60) jeweils einen auf einer Stellfläche ruhenden konvex ausgeformten Gleitfuß (62) aufweist, welcher durch einen durch den zugeordneten Fuß (50; 52) geführten Schraubbolzen (64) mit einem Sterngriff (66) verbunden ist.

6. Anlage nach einem der Ansprüche 1 bis 5, **dadurch gekennzeichnet, dass** eine Libelle (62) am Messtisch (24) angeordnet ist.

7. Verfahren zur Prüfung der Ausrichtung der Strahlungsachse eines Radarsensors an einem Fahrzeug (12) mittels einer Anordnung nach Anspruch 1 durch a) Anordnen wenigstens einer Referenzlaserquelle (16, 18) seitlich am Fahrzeug (12) mit Ausrichtung der Lichtstrahlrichtung im rechten Winkel zur Hinterachse (14) des Fahrzeugs (12) und nach vorn auf einen Messtisch (24) weisend, b) Anordnen einer Laserlichtquelle (38) in Abhängigkeit von einer Referenzspiegelfläche(20) des Radarsensors des Fahrzeugs (12), **gekennzeichnet durch** c) Anbringen der Laserlichtquelle (38) am Messtisch (24) und Ausrichten der Lichtstrahlrichtung der Laserlichtquelle (38) auf die Referenzspiegelfläche (20) des Radarsensors des Fahrzeugs (12) und **durch** d) Messen des von der Referenzspiegelfläche (20) des Radarsensors des Fahrzeugs (12) reflektierten Lichtstrahls auf eine die Laserlichtquelle (38) umgebende Messskala (42).

## Claims

1. An apparatus (10) for examining the orientation of the axis of radiation of a radar sensor on a vehicle (12), with at least one reference laser source (16, 18), which is laterally attached to the vehicle with orientation of the light radiation direction at a right angle to the rear axle (14) of the vehicle (12) and pointing forward, and with a laser light source (38) which is in operative connection with a reference reflecting surface (20) on the radar sensor of the vehicle (12), wherein the reference laser sources (16, 18) and the reference reflecting surface (20) on the radar sensor of the vehicle (12) are directed to a plane table (24) arranged in front of the vehicle (12) and arranged transverse to the vehicle longitudinal axis (22), wherein reflecting surfaces (28, 30) are arranged on the measurement table (24) which face measuring scales (34, 36) allocated to the reference laser sources (16, 18) and which are arranged parallel to these, **characterised in that** the plane table (24) has a twist-resistant, exactly straight girder profile (26) on the front side of which are situated the reflecting surfaces (28, 30), that a ferromagnetic surface (32) is arranged on the front side of the girder profile (26), the laser light source (38) is displaceably and fixably attached to the plane table (24) and faces the reference reflecting surface (20) on the radar sensor of the vehicle (12), wherein the laser light source (38) is surrounded by a measuring scale (42), onto which hits light of the laser light source (38) reflected by the reference reflecting surface (20) on the radar sensor of the vehicle (12) and that the laser light source (38) is equipped with a magnet base (40) which can be switched on and off and which can be attached to the ferromagnetic surface (32) of the girder profile (26).

2. The apparatus according to claim 1, **characterised in that** the switchable magnet base (40) has a flat rear side with an adhering surface (72) for durable connection to the girder profile (26) and a switch (74) for coupling or decoupling a permanent magnet arranged in the magnet base (40) or for switching on and switching off an electromagnet arranged in the magnet base (40).

3. The apparatus according to claim 1 or 2, **characterised in that** the laser light source (38) is surrounded by the measuring scale (42) in the form of a two-dimensional measurement grid (68, 70).

4. The apparatus according to one of claims 1 to 3, **characterised in that** the horizontally arranged girder profile (26) is attached to a retaining frame (44) with vertical posts (46, 48), at the ends of which vertical feet (50, 52) are arranged transverse to the girder profile (26), the feet (50, 52) respectively being equipped with adjustable feet (54 - 60) at their ends.

5. The apparatus according to claim 4, **characterised in that** each adjustable foot (54 - 60) respectively has a convexly shaped sliding foot (62) which rests on an installation space and which is connected to a star handle (66) via a stud bolt (64) guided through the allotted foot (50; 52).

6. The apparatus according to one of claims 1 to 5, **characterised in that** a spirit level (62) is arranged on the plane table (24).

7. A method of examining the orientation of the axis of radiation of a radar sensor on a vehicle (12) by means of an arrangement according to claim 1 by a) arranging at least one reference laser source (16, 18) laterally on the vehicle (12) with orientation of the light radiation direction at a right angle to the rear axle (14) of the vehicle (12) and pointing forward to a plane table (24), b) arranging a laser light source (38) depending on a reference reflecting surface (20) of the radar sensor of the vehicle (12), **characterised by** c) attaching the laser light source (38) to the plane table (24) and orienting the light radiation direction of the laser light source (38) onto the reference reflecting surface (20) of the radar sensor of the vehicle (12) and by d) measuring the light ray reflected by the reference reflecting surface (20) of the radar sensor of the vehicle (12) on a measurement scale (42) surrounding the laser light source (38).

## Revendications

1. Installation (10) destinée à vérifier l'orientation de l'axe de rayonnement d'un capteur radar sur un véhicule (12) avec au moins une source laser de référence (16, 18) qui est disposée sur le côté du véhicule, la direction du rayon lumineux étant orientée de manière à former un angle droit avec l'axe arrière (14) du véhicule (12), et de façon dirigée vers l'avant, et avec une source de lumière laser (38) qui concourt avec une surface de miroir de référence (20) sur le capteur radar du véhicule (12), les sources laser de référence (16, 18) et la surface de miroir de référence (20) étant orientées vers une table de mesure (24) qui est disposée devant le véhicule (12), transversalement à l'axe longitudinal (22) de celui-ci et sur laquelle sont disposées des surfaces de miroir (28, 30) qui sont tournées vers des échelles de mesure (34, 36) associées aux sources laser de référence (16, 18) et disposées parallèlement à celles-ci, **caractérisée en ce que** la table de mesure (24) présente un profilé porteur (26) résistant à la torsion, exactement linéaire, sur la face avant duquel sont situées les surfaces de miroir (28, 30), **en ce qu'**une surface ferromagnétique (32) est disposée sur la face avant du profilé porteur (26), **en ce que** la source de lumière laser (38) est montée de façon coulissante et fixable sur la table de mesure (24) et tournée vers la surface de miroir de référence (20) sur le capteur radar du véhicule (12), la source de lumière laser (38) étant entourée par une échelle de mesure (42), sur laquelle est incidente la lumière de la source de lumière laser (38) réfléchie par la surface de miroir de référence (20) sur le capteur radar du véhicule (12) et **en ce que** la source de lumière laser (38) est munie d'un pied magnétique (40) pouvant être activé et désactivé et monté sur la surface ferromagnétique (32) du profilé porteur (26).

2. Installation suivant la revendication 1, **caractérisée en ce que** le pied magnétique commutable (40) présente une face arrière plane avec une surface d'adhérence (72) pour la fixation durable sur le profilé porteur (26) et un interrupteur (74) pour le couplage et découplage d'un aimant permanent disposé dans le pied magnétique (40) ou pour activer et désactiver un électroaimant disposé dans le pied magnétique (40).

3. Installation suivant la revendication 1 ou 2, **caractérisée en ce que** la source de lumière laser (38) est entourée par l'échelle de mesure (42) sous la forme d'une grille de mesure à deux dimensions (68, 70)L.

4. Installation suivant une des revendications 1 à 3, **caractérisée en ce que** le profilé porteur (26), disposé horizontalement, est fixé sur une structure de support (44) avec des montants verticaux (46, 48), aux extrémités desquels sont disposés transversalement au profilé porteur (26) des pieds verticaux (50, 52), dont les extrémités sont respectivement munis de pieds réglables (54 - 60).

5. Installation suivant la revendication 4, **caractérisée en ce que** chaque pied réglable (54 - 60) présente respectivement un pied coulissant conçu convexe qui repose sur une surface d'appui, pied coulissant qui est relié à une poignée étoile (66) par l'intermédiaire d'un boulon fileté (64) guidé à travers le pied associé (50, 52).

6. Installation suivant une des revendications 1 à 5, **caractérisée en ce qu'**un niveau à bulle (62) est disposé sur la table de mesure (24).

7. Procédé destiné à vérifier l'orientation de l'axe de rayonnement d'un capteur radar sur un véhicule (12) au moyen d'un agencement suivant la revendication 1 en a) disposant au moins une source laser de référence (16, 18) sur le côté du véhicule (12), la direction du rayon de lumière étant orientée de manière à former un angle droit avec l'axe arrière (14) du véhicule (12), et de façon dirigée vers l'avant sur une table de mesure (24), b) en disposant une source de lumière laser (38) en fonction d'une surface de miroir de référence (20) du capteur radar du véhicule (12) **caractérisé par** (c) le montage de la source de lumière laser (38) sur la table de mesure (24) et l'orientation de la direction du rayon lumineux de la source de lumière laser (38) sur la surface de miroir de référence (20) du capteur radar du véhicule (12) et d) la mesure du rayon de lumière réfléchi par la surface de miroir de référence (20) du capteur radar du véhicule (12) sur une échelle de mesure (42) entourant la source de lumière laser (38).
